# EUROPÄISCHE PATENTSCHRIFT

(11) **EP 3 115 642 B1**
(45) Veröffentlichungstag und Bekanntmachung des Hinweises auf die Patenterteilung: **04.09.2024**
(21) Anmeldenummer: 16157764.8
(22) Anmeldetag: 29.02.2016
(51) Int. Cl.: F16G 3/04, F16G 3/02, F16G 11/02, F16G 3/00, B65G 15/30, F16G 11/04

(54) **GURT ODER GURTSEGMENT**
BELT OR BELT SEGMENT
COURROI OU SECTION DE COURROI

(30) Priorität: 08.07.2015 DE 102015212747
(43) Veröffentlichungstag der Anmeldung: 11.01.2017
(73) Patentinhaber: ContiTech Deutschland GmbH, 30175 Hannover (DE)
(72) Erfinder: Hüls, Achim, 30890 Barsinghausen (DE); Möschen-Siekmann, Michael, 37176 Nörten-Hardenberg (DE); Behrens, Carsten, 37434 Bilshausen (DE)
(74) Vertreter: Continental Corporation

(56) Entgegenhaltungen:
- WO-A1-01/38756
- DE-U1- 202010 015 791
- US-A- 3 105 390
- US-A- 3 810 278
- US-A1- 2013 213 774
- US-A1- 2015 075 951

## Beschreibung

### Gurt oder Gurtsegment

Die Erfindung betrifft einen Gurt oder ein Gurtsegment gemäß dem Oberbegriff des Anspruchs 1.

Endlos geschlossene Gurte stellen ringförmige Elemente dar, welche z.B. als Antriebsgurte wie z.B. Keilriemen zur Kraftübertragung verwendet werden können. Sie können auch als Fördergurte dazu verwendet werden, z.B. lose Schüttgüter zu transportieren.

Derartige Gurte können auch verwendet werden, um als Skidgleitgurte sog. Skids zu transportieren. Unter einem Skid wird ein Werkstückträger verstanden, auf dem ein Werkstück gelagert werden kann, um dann mittels des kraftschlüssigen und bzw. oder formschlüssigen Kontakts des Werkstückträgers mit der Oberfläche des Gleitgurts in der Horizontalen bewegt zu werden. Beispielsweise können Fahrzeuge bei der Montage auf diese Art und Weise entlang der Arbeitsstationen bewegt werden. Hierbei werden üblicherweise zwei parallel laufende Skidgleitgurte verwendet, die den Skid z.B. an seinen Außenkanten bzw. Kufen erfassen und bewegen können.

Diese Gurte laufen i.Allg. um einen Antrieb und weitere Führungs- bzw. Stützrollen herum, um die Antriebsleistung auf ein Abtriebselement zu übertragen (Keilriemen) oder um die Antriebsleistung zum Materialtransport zu nutzen (Fördergurt). Hierzu weisen diese Gurte zum einen eine vorbestimmte Elastizität auf, welche z.B. durch die Verwendung eines Elastomermaterials wie z.B. Gummi als Basismaterial des Gurtes erreicht werden kann. Zum anderen weisen diese Gurte üblicherweise in Längsrichtung einen oder mehrere Festigkeitsträger zur Übertragung der Zugkräfte in Laufrichtung des Gurtes auf. Dies können z.B. Stahlseile sein, welche eine besonders hohe Kraftübertragung erlauben. Auch Textilgewebe sind als Festigkeitsträger üblich.

Derartige Gurte können z.B. als Keilriemen teilweise bereits geschlossen hergestellt werden. In den meisten Fällen z.B. als Fördergurte wie z.B. als Skidgleitgurte werden die Gurte aufgrund ihrer Länge in Längsrichtung üblicherweise offen, d.h. als länglicher Körper, herstellt und auch so zum Ort der Anwendung transportiert. Dort werden sie dann endlos geschlossen. Dabei kann ein Gurt über seine beiden Enden in sich selbst endlos geschlossen werden oder es können wenigstens zwei Gurtsegmente hintereinander angeordnet und miteinander zu einem Gurt endlos geschlossen werden. Das endlose Schließen kann z.B. durch Zusammenvulkanisieren der beiden Enden erfolgen, was jedoch ein zerstörungsfreies Trennen der Enden und damit Öffnen des Gurtes z.B. bei Verschleiß oder Beschädigung ausschließt. Ferner ist hierzu ein großer Aufwand vor Ort der Anwendung erforderlich.

Daher ist es bekannt, die Enden der Festigkeitsträger an den beiden Enden des offenen Gurtes vom Elastomermaterial freizulassen bzw. freizulegen und diese mechanisch zu verbinden. Dies kann z.B. dadurch erfolgen, dass die jeweiligen Enden in einem jeweils gemeinsamen Kopplungselement eingeklemmt und die beiden Kopplungselemente z.B. scharnierartig mittels eines Kopplungsstabes miteinander verbunden werden. Durch die Aufteilung dieser mechanischen Klemmverbindung auf zwei Kopplungselemente, die dann als Gelenk gegeneinander verdrehbar sind, soll die Biegsamkeit des Gurtes als Ganzes möglichst wenig eingeschränkt werden. Dies kann insbesondere bei kleinen Umlenkradien erforderlich sein, wie sie bei Skidgleitgurten üblicherweise auftreten.

Die WO 2012 038 155 A1 sowie die WO 2013 174 666 A1 zeigen einen Gurt aus elastomerem Werkstoff mit einer Festigkeitsträgerlage aus in Längsrichtung des Gurtes verlaufenden, parallel zueinander angeordneten Stahlseilen. Die Stahlseilenden sind jeweils in einem Verbindungselement in Form eines Gurtendekörpers durch Verpressen kraftschlüssig eingeklemmt. Die beiden Verbindungselemente weisen jeweils zueinander hin gerichtete und einander seitlich überlappende zinnenartige Vorsprünge auf, die mit Querbohrungen versehen sind. Durch die Querbohrungen kann ein Kopplungsstab geführt werden, gegenüber dem sich die beiden Gurtendekörper gegeneinander drehen können. Hierdurch wird der Gurt endlos geschlossen und die beiden Gurtenden miteinander scharnierartig gekoppelt. Die Verbindungselemente bzw. Scharnierplatten sind einteilig und aus Metall ausgebildet.

Nachteilig ist hierbei, dass üblicherweise auch die Skids aus Metall wie z.B. Stahl ausgebildet sind. Hierdurch kann es bei der Anwendung passieren, dass der Skid mit der metallischen Unterseite seiner Kufen vollständig oder teilweise auf der metallischen Oberfläche eines Verbindungselements bzw. beider Verbindungselemente aufliegt. Hierdurch tritt an dieser Stelle eine Reibpaarung von Metall auf Metall auf im Gegensatz zu den übrigen Bereichen des Skidgleitgurts, wo die Kufen des Skids auf der elastomeren Oberfläche des Skidgleitgurts aufliegen, d.h. eine Reibpaarung von Metall auf Gummi vorliegt. Insbesondere können auf diese Weise unterschiedliche Reibpaarungen für zwei parallel zueinander angeordnete Skidgleitgurte auftreten, die denselben Skid befördern.

Diese unterschiedlichen Reibpaarungen können nun dazu führen, dass bei der Bewegung des Skidgleitgurtes die beiden Seiten bzw. Kufen des gemeinsam getragenen Skids unterschiedlich stark durch den Skidgleitgurt bewegt werden und hierdurch verrutschen können, weil bei der Metall-Metall-Reibpaarung der einen Kufe ein geringerer Reibwert vorliegt als bei der Metall-Gummi-Reibpaarung der anderen Kufe, bis wieder an beiden Kufen Metall-Gummi-Reibpaarungen vorliegen. Hierdurch kann der Skid im Betrieb verrutschen, insbesondere sich um seine Hochachse verdrehen, und so seinen Transport stören. Möglicherweise kann der verdrehte Skid mit anderen Gegenständen kollidieren oder sogar Personen verletzen. Das Verrutschen kann insbesondere beim Anfahren bzw. Anhalten des Skidgleitgurts auftreten.

Eine Aufgabe der vorliegenden Erfindung ist es, einen Gurt oder ein Gurtsegment der eingangs beschriebenen Art bereit zu stellen, welcher bzw. welches nach außen gerichtet ein möglichst einheitliches Reibverhalten aufweist. Insbesondere sollen unterschiedliche Reibpaarungen vermieden werden. Insbesondere soll eine ungewollte Gleitbewegung bzw. Drehung auf der Gurtoberseite zu transportierender Objekte wie z.B. eines Skids vermieden werden.

Die Aufgabe wird erfindungsgemäß durch einen Gurt bzw. ein Gurtsegment mit den Merkmalen gemäß Anspruch 1 gelöst. Vorteilhafte Weiterbildungen sind in den Unteransprüchen beschrieben.

Somit betrifft die vorliegende Erfindung einen Gurt oder ein Gurtsegment mit einer Mehrzahl von in Längsrichtung verlaufenden und parallel zueinander angeordneten Festigkeitsträgern. Die Festigkeitsträger sind vorzugsweise Stahlseile, welche hohe Zugkräfte übertragen können. Unter Längsrichtung ist die Richtung zu verstehen, in der der Gurt bzw. das Gurtsegment endlos geschlossen ist bzw. geschlossen werden kann. Hierzu senkrecht erstreckt sich die Querrichtung, welche auch als Breite bezeichnet werden kann, sowie die Höhe bzw. Dicke des Gurtes bzw. Gurtsegments. Ein Gurt kann durch die Verbindung seiner beiden Enden endlos geschlossen werden oder mehrere Gurtsegmente können über die Verbindung ihrer Enden zu einem Gurt endlos geschlossen werden.

Der Gurt oder das Gurtsegment weist ferner ein Verbindungselement auf, welches ein Ende des Gurtes bzw. des Gurtsegments bildet und zur Verbindung mit einem weiteren Verbindungselement des anderen Endes des Gurts bzw. mit einem Ende eines weiteren Gurtsegments ausgebildet ist. Die Enden der Festigkeitsträger können von dem Verbindungselement gehalten werden. Das Verbindungselement ist scharnierartig ausgebildet, so dass es mit einem entsprechenden zweiten Verbindungselement des anderen Endes des Gurtes bzw. eines Endes eines weiteren Gurtsegments ein drehbares Gelenk ausbilden kann. Hierdurch kann ermöglicht werden, dass sich dieser Kopplungsbereich einer Umlenkung des geschlossenen Gurtes um z.B. eine Trommel besser anpassen kann.

Vorzugsweise wird diese Kopplung zwischen den Verbindungselementen durch einen Kopplungsstab realisiert, der in Querrichtung durch Bohrungen der zinnenartigen Vorsprünge der Verbindungselemente hindurchgeführt und gesichert ist. Hierdurch kann diese Verbindung auch lösbar ausgebildet sein.

Der Gurt oder das Gurtsegment ist dadurch gekennzeichnet, dass das Verbindungselement an seiner gurtäußeren Seite zumindest abschnittsweise einen vorbestimmten Reibwert aufweist. Unter der gurtäußeren Seite ist die Seite des geschlossenen Gurtes zu verstehen, welche nach außen gerichtet ist. Auf dieser Seite können im Betrieb Gegenstände wie z.B. ein Skid transportiert werden. Hierzu muss eine gewisse Reibung zwischen den Unterseiten der Kufen des Skids und der Oberfläche des Gurtes vorhanden sein, um den Skid mit dem Gurt mitbewegen zu können.

Damit diese gewisse und für die Mitbewegung ausreichende Reibung möglichst ununterbrochen über die gesamte Länge des Gurtes vorhanden ist, wird erfindungsgemäß ein vorbestimmter Reibwert an der gurtäußeren Seite des Verbindungselements vorgesehen. Gemeint ist hiermit, dass der Reibwert des Verbindungselements nach außen hin größer ist als der Reibwert des Verbindungselement an sich, d.h. als der Reibwert des Materials des Grundkörpers des Verbindungselements, welches i.Allg. aus Metall besteht. Hierdurch kann ein Rutschen des mitzubewegenden Objekts an der Stelle des Gurtes, an der die Verbindung mittels Verbindungselementen angeordnet ist, vermieden werden. Dieses Rutschen kann insbesondere dann auftreten, falls das Metall der Kufe z.B. des Skids mit dem Metall der Verbindungselemente in Kontakt kommt.

Hierzu kann ein Verbindungselement der beiden Verbindungselemente erfindungsgemäß ausgeführt sein, um diese Vorteile zu erreichen. Es können auch beide Verbindungselemente entsprechend ausgeführt sein. Dies kann jeweils abschnittsweise oder vollständig der Fall sein. Hierbei kommt es auf den Anwendungsfall an, so dass der vorbestimmte Reibwert zumindest abschnittsweise erreicht wird, um ein Rutschen zu vermeiden. Hierbei ist auch die Ausdehnung des flächigen Kontakts mit dem mitzubewegenden Objekt zu berücksichtigen.

Die Einstellung des vorbestimmten Reibwertes kann durch die Beschaffenheit der nach außen gerichteten Oberfläche des Verbindungselements erreicht werden. Dies kann durch das Material selbst bzw. eine Beschichtung geschehen. Auch kann die Struktur der Oberfläche z.B. durch Rillen oder dergleichen entsprechend ausgestaltet sein.

Gemäß einem Aspekt der vorliegenden Erfindung entspricht der Reibwert der gurtäußeren Seite des Verbindungselements zumindest abschnittsweise dem Reibwert der Gurtaußenseite. Hierdurch kann in identisches Reibverhalten über die gesamte Gurtlänge erreicht werden.

Gemäß einem weiteren Aspekt der vorliegenden Erfindung weist das Verbindungselement eine Abdeckung auf, welche zumindest abschnittsweise, vorzugsweise im Wesentlichen, vorzugsweise vollständig, die gurtäußere Seite des Verbindungselements bildet und welche den vorbestimmten Reibwert aufweist. Auf diese Weise kann der vorbestimmte Reibwert unabhängig vom Material des Verbindungselements durch das Material bzw. die Oberflächenbeschaffenheit der Abdeckung vorgenommen werden. Vorteilhaft ist hierbei, dass das Verbindungselement auf seine Funktion der Verbindung der Gurtenden ausgelegt werden kann, ohne das Problem des Rutschens berücksichtigen zu müssen. Diese Aufgabenstellung kann der Auslegung der Abdeckung zugrunde gelegt werden, so dass die Abdeckung hieraufhin optimiert werden kann.

Gemäß einem weiteren Aspekt der vorliegenden Erfindung kann die Abdeckung formschlüssig von dem Verbindungselement gehalten werden. Hierdurch kann eine einfache aber sichere Verbindung geschaffen werden, welche ferner lösbar ist, z.B. zur Wartung, Reparatur etc.

Gemäß einem weiteren Aspekt der vorliegenden Erfindung weist die Abdeckung Rasthaken auf, die vorzugsweise das Verbindungselement in Querrichtung umgreifen können. Hierdurch kann eine formschlüssige Verbindung auf einfache Art und Weise geschafften werden. Diese in Querrichtung wirken zu lassen hat den Vorteil, dass die Befestigungsstellen der formschlüssigen Verbindung außerhalb der Kontaktflächen zwischen Verbindungselement und mitzubewegendem Objekt liegen können, so dass die Abdeckungen frei von der Belastung des Betriebs sein können. Dies kann die Verbindung schonen und damit ihre Lebensdauer erhöhen.

Gemäß einem weiteren Aspekt der vorliegenden Erfindung können die Enden der Festigkeitsträger mit wenigstens einem Klemmkörper kraftschlüssig verbunden werden, wobei der Klemmkörper von dem Verbindungselement wenigstens in Längsrichtung formschlüssig gehalten werden kann. Die geklemmte Verbindung zwischen den Enden der Festigkeitsträger mit dem Klemmkörper kann vorzugsweise durch Verpressen erfolgen.

Diesem Aspekt der vorliegenden Erfindung liegt dabei der Gedanke zu Grunde, auf diese Weise eine Funktionstrennung der Verbindung der Enden der Festigkeitsträger mit dem Verbindungselement zu erreichen. Denn aus dem Stand der Technik ist es bisher bekannt, die Enden der Festigkeitsträger in dem Material des Verbindungselements direkt durch Verpressen einzuklemmen und so eine kraftschlüssige Verbindung direkt zwischen den Festigkeitsträgern und dem Verbindungselement herzustellen.

Erfindungsgemäß erfolgt nun die geklemmte Verbindung der Enden der Festigkeitsträger in dem Klemmkörper, der einen separaten Körper gegenüber dem Verbindungselement darstellt. Der Klemmkörper seinerseits kann dann vom Verbindungselement derart aufgenommen werden, dass eine formschlüssige Verbindung in Längsrichtung hergestellt werden kann. Auf diese Weise können sich die Kräfte, die zur Herstellung der kraftschlüssigen Verbindung zwischen den Enden der Festigkeitsträger mit dem Klemmkörper z.B. durch Verpressen erforderlich sind, nicht mehr auf das Verbindungselement auswirken und dieses ungewollt deformieren. Hierdurch kann der bisher auftretende Verzug des Verbindungselements vermieden werden. Dies kann auch den hierdurch erzeugten erhöhten Abrieb zweier Verbindungselemente aneinander reduzieren oder sogar vermeiden und damit die Lebensdauer des Gurtes bzw. des Gurtsegments bzw. deren Kopplung erhöhen. Gleichzeitig kann die hohe Haltbarkeit der kraftschlüssigen Verbindung beibehalten werden.

Vorteilhaft ist ferner, dass die Materialien der Klemmkörper und Verbindungselemente nun auf den jeweiligen Zweck optimiert ausgelegt werden können. Hierzu können unterschiedliche Materialien verwendet werden, z.B. ein Stahl mit guter plastischer Verformbarkeit bei gleichzeitiger hoher Festigkeit für den Klemmkörper und ein harter oder härtbarer Stahl mit hoher Verschleißfestigkeit und Zugfestigkeit für das Verbindungselement. Hierdurch kann die Verformbarkeit des Klemmkörpers beim Verpressen und die Stabilität des Verbindungselements bei Zugbelastung jeweils optimiert werden.

Vorzugsweise ist das Verbindungselement derart ausgebildet, dass es sich vollständig in den Querschnitt des Gurtes bzw. des Gurtsegments integrieren lässt. Hierunter ist zu verstehen, dass das Verbindungselement weder in der Höhe noch in der Breite über die Kontur des Gurtes bzw. Gurtsegments hinausragt. Auf diese Weise kann ein Einfluss auf das Laufverhalten des endlos geschlossenen Gurtes vermieden werden.

Vorzugsweise ist das Material des Klemmkörpers relativ zum Material des Verbindungselements weicher. Unter "weich" ist hierbei eine bessere Fließfähigkeit oder plastische Verformbarkeit des Materials des Klemmkörpers in Relation zum Material des Verbindungselements zu verstehen. Beispielsweise kann als Material des Klemmkörpers z.B. ein rostfreier Edelstahl wie z.B. V4A verwendet werden. Als Material des Verbindungselements kann z.B. ein harter oder härtbarer Stahl eingesetzt werden. Das vergleichsweise weiche Material des Klemmkörpers begünstigt ein gutes Verpressen mit den Enden des Festigkeitsträgers wie z.B. Stahlseile. Dies kann die Klemmwirkung bei gleicher Presskraft erhöhen bzw. die erforderliche Presskraft zur Herstellung der kraftschlüssigen Verbindung reduzieren. Das Material des Verbindungselements kann durch seine vergleichsweise hohe Härte hohe Belastungen aufnehmen und hierdurch einem Verzug entgegenwirken. Ebenso kann hierdurch grundsätzlich der Verschleiß durch Abrieb reduziert werden.

Vorteilhaft ist dabei auch, dass das Verbindungselement durch ein Guß- oder Schmiedeteil hergestellt werden kann, was die Herstellungskosten reduzieren kann. Der Klemmkörper kann gleichzeitig durch einen kleinen und geometrisch einfachen Körper realisiert werden, was ebenfalls die Herstellungskosten reduzieren kann.

Vorzugsweise sind wenigstens zwei Enden der Festigkeitsträger mit einem gemeinsamen Klemmkörper kraftschlüssig verbunden. Ein größerer Klemmkörper kann einfacher herzustellen, zu handhaben und zu montieren sein, was die Herstellung- und Montagekosten reduzieren kann.

Vorzugweise sind alle Enden der Festigkeitsträger in einem gemeinsamen Klemmkörper eingeklemmt. Dies hat den Vorteil, dass die eingeklemmten Festigkeitsträger gemeinsam einfacher zu handhaben sind.

Vorzugsweise sind wenigstens zwei Enden der Festigkeitsträger jeweils einzeln mit einem Klemmkörper kraftschlüssig verbunden. Hierdurch können kleinere Klemmkörper verwendet werden, was die Variantenvielfalt reduzieren kann.

Vorzugweise sind alle Enden der Festigkeitsträger jeweils mit einem einzelnen Klemmkörper verbunden. Hierdurch kann ein einheitlicher Klemmkörper wiederholend verwendet werden, auch für Gurte bzw. Gurtsegmente mit einer unterschiedlichen Anzahl von Festigkeitsträgern, was die Herstellungskosten reduzieren kann. Mit anderen Worten kann darauf verzichtet werden, unterschiedliche Klemmkörper für unterschiedliche Gurte bzw. Gurtsegmente herstellen und bereitstellen zu müssen.

Gemäß einem weiteren Aspekt der vorliegenden Erfindung weist das Verbindungselement wenigstens eine Klemmkörperaufnahme auf, in der wenigstens ein mit einem Klemmkörper versehenes Ende eines Festigkeitsträgers aufgenommen und wenigstens in Längsrichtung formschlüssig gehalten werden kann. Durch die Klemmkörperaufnahme innerhalb der Abmaße des Verbindungselements kann ein Platz geschaffen werden, an dem der Klemmkörper vom Verbindungselement aufgenommen werden kann, um formschlüssig Halt zu finden.

Vorzugsweise ist die Klemmkörperaufnahme ausgebildet, einen Klemmkörper aufzunehmen, mit dem die Enden mehrerer Festigkeitsträger kraftschlüssig verbunden sind. Hierdurch kann ein Platz zur Aufnahme eines derartigen Klemmkörpers durch das Verbindungselement geschaffen werden, welche aufgrund ihrer Größe einfacher und schneller herzustellen sein kann als mehrere kleinere Klemmkörperaufnahmen.

Vorzugsweise ist die Klemmkörperaufnahme ausgebildet, einen Klemmkörper aufzunehmen, mit dem das Ende eines Festigkeitsträgers kraftschlüssig verbunden ist. Hierdurch wird ein Platz zur Aufnahme eines derartigen Klemmkörpers durch das Verbindungselement geschaffen, d.h. für sehr kleine Klemmkörper, die jeweils nur ein einzelnes Ende eines Festigkeitsträgers in sich aufnehmen können.

Gemäß einem weiteren Aspekt der vorliegenden Erfindung weist das Verbindungselement wenigstens zwei Klemmkörperaufnahmen auf, in denen jeweils wenigstens ein mit einem Klemmkörper versehenes Ende eines Festigkeitsträgers aufgenommen und wenigstens in Längsrichtung formschlüssig gehalten werden kann, wobei die beiden Klemmkörperaufnahmen in Querrichtung durch einen in Längsrichtung verlaufenden Steg voneinander getrennt sind. Auf diese Weise kann die Übertragung von Zugkräften in Längsrichtung verbessert werden, weil diese nicht nur über die seitlichen Kanten des Verbindungselements sondern auch durch die Stege zwischen den Klemmkörperaufnahmen direkt übertragen werden können. Hierdurch kann die Verformung des Verbindungselements reduziert werden.

Gemäß einem weiteren Aspekt der vorliegenden Erfindung weist das Verbindungselement wenigstens eine Festigkeitsträgerdurchführung auf, durch die wenigstens ein Festigkeitsträger in Längsrichtung in eine Klemmkörperaufnahme geführt werden kann. Der Bereich des Verbindungselements, durch den ein Festigkeitsträger durch die Festigkeitsträgerdurchführung hindurch in die Klemmkörperaufnahme austreten kann, bildet den Anschlag des Klemmkörpers für den formschlüssigen Halt des Verbindungselements.

Gemäß einem weiteren Aspekt der vorliegenden Erfindung ist die Festigkeitsträgerdurchführung als Bohrung oder als Nut durch das Verbindungselement ausgebildet ist.

Durch die Ausführung der Festigkeitsträgerdurchführung als Bohrung kann die Festigkeitsträgerdurchführung ringsherum vom Material des Verbindungselements umgeben sein, so dass die Kräfte des Formschlusses gleichmäßig übertragen werden können. Hierdurch kann eine größere Stabilität erzeugt werden. Dabei ist es erforderlich, dass die Enden der Festigkeitsträger durch die Bohrungen hindurch in die Klemmkörperaufnahme gesteckt werden, wo sie in entsprechende Aufnahmen des Klemmkörpers eingeführt und dann dort verpresst werden können.

Durch die Ausführung der Festigkeitsträgerdurchführung als Nut ist das Material des Verbindungselements in der Höhe unterbrochen, so dass die mit dem Klemmkörper versehenen Enden der Festigkeitsträger von einer Seite in die Nuten eingelegt werden können. Hierbei wird gleichzeitig der Klemmkörper in die Klemmkörperaufnahme eingelegt. Auf diese Weise kann das Verpressen unabhängig vom Verbindungselement vor diesem Schritt erfolgen.

Gemäß einem weiteren Aspekt der vorliegenden Erfindung kann die Abdeckung die Nut und bzw. oder die Klemmkörperaufnahme senkrecht zur Längsrichtung verschließen kann. Auf diese Weise können die in die Nuten eingeführten Festigkeitsträger bzw. der in der Klemmkörperaufnahme aufgenommene Klemmkörper dort durch die Abdeckung geschützt werden. Weiterhin können durch die Abdeckung die Reibungswerte des Gelenkes an die Oberfläche des Gurtes und die optische Erscheinung des Gurtes beeinflusst werden.

Gemäß einem weiteren Aspekt der vorliegenden Erfindung ist die Festigkeitsträgerdurchführung in Längsrichtung in entgegengesetzter Richtung zu den Enden der Festigkeitsträger aufgeweitet ausgebildet. Auf diese Weise kann insbesondere bei einer Biegung des Gurtes z.B. an einer Trommel ein Einknicken der Festigkeitsträger vermieden werden. Mit anderen Worten kann erreicht werden, dass die Festigkeitsträger immer in der neutralen Phase verlaufen können. Dies vermeidet Beschädigungen der Festigkeitsträger und erhöht deren Lebensdauer bzw. die Lebensdauer des Gurtes.

Vorzugsweise ist die Aufweitung der Festigkeitsträgerdurchführung kegelförmig ausgebildet. Hierdurch kann der zuvor beschriebenen Vorteile einfach umgesetzt werden. Dies gilt ebenso für eine hyperbolische Form der Aufweitung.

Gemäß einem weiteren Aspekt der vorliegenden Erfindung weist der Gurt bzw. das Gurtsegment einen elastomeren Grundkörper auf, in dem die Festigkeitsträger eingebettet sind, wobei die Enden der Festigkeitsträger von dem Material des elastomeren Grundkörpers freigelegt und bzw. oder freigelassen sind. Das Material des elastomeren Grundkörpers ist vorzugsweise ein vulkanisiertes Gummi. Auf diese Weise kann ein elastischer Gurt bzw. ein elastisches Gurtsegment geschaffen werden. Hierbei ist unter dem Freilegen bzw. Freilassen der Enden der Festigkeitsträger ein äußeres Freilegen von dem elastomeren Material des Grundkörpers zu verstehen, so dass die Enden der Festigkeitsträger wie z.B. Stahlseile nach außen blank erscheinen und aufgrund ihres geringen Querschnitts in die Klemmkörperaufnahmen des Klemmkörpers eingeführt und dort verpresst werden können.

Gemäß einem weiteren Aspekt der vorliegenden Erfindung weist das Verbindungselement an seiner gurtinneren Seite eine halbkreisförmige Einbuchtung auf. Diese Einbuchtung ist halbschalenförmig ausgebildet und entspricht in ihrem Radius dem Radius z.B. einer Trommel, auf dem der Gurt bzw. dessen Kopplungsbereich umgelenkt werden kann. Diese Einbuchtung erleichtert das Abrollen auf der Trommel und kann ein Einknicken der Festigkeitsträger vermeiden helfen, so dass die Festigkeitsträger auch beim Abrollen stets in der neutralen Phase bleiben können. Hierdurch kann ein Einknicken der Festigkeitsträger vermieden und deren Lebensdauer bzw. die Lebensdauer des Gurtes erhöht werden.

Die vorliegende Erfindung betrifft auch ein Verbindungselement zur Verwendung mit einem Gurt oder Gurtsegment wie zuvor beschrieben.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung eines Transportsystems mit einem erfindungsgemäßen Gurt zur Bewegung eines Skids in Längsrichtung;
- Fig. 2: eine perspektivische schematische Darstellung eines Transportsystems mit einem erfindungsgemäßen Gurt zur Bewegung eines Skids in Querrichtung;
- Fig. 3: eine perspektivische schematische Darstellung eines erfindungsgemäßen Gurtes mit einem offenen und einem geschlossenen Verbindungselement;
- Fig. 4: die Darstellung der Fig. 3 mit zwei geschlossenen Verbindungselementen; und
- Fig. 5: ein Ende eines erfindungsgemäßen Gurtes mit separater Abdeckung.

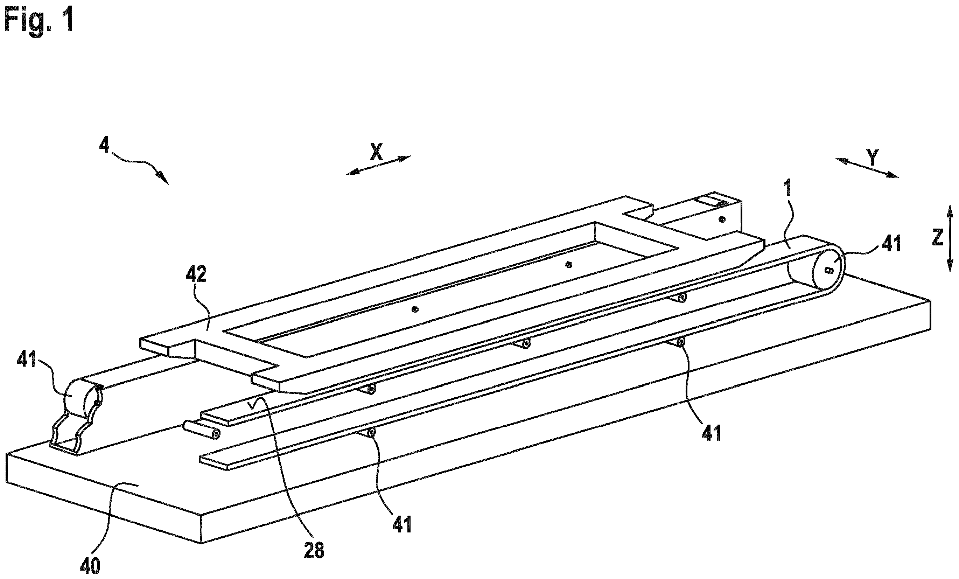

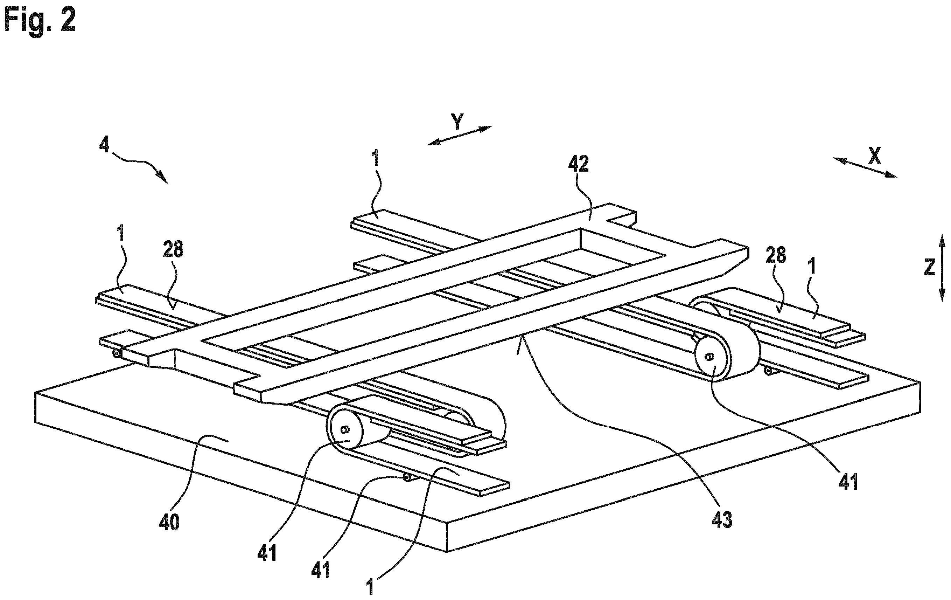

Die Fig. 1 zeigt eine perspektivische schematische Darstellung eines Transportsystems 4 mit einem erfindungsgemäßen Gurt 1 zur Bewegung eines Skids 42 in Längsrichtung X. Die Fig. 2 zeigt eine perspektivische schematische Darstellung eines Transportsystems 4 mit einem erfindungsgemäßen Gurt 1 zur Bewegung eines Skids 42 in Querrichtung Y.

Auf einem Untergrund 40 ist ein Transportsystem 4 angeordnet, welches zwei parallel zueinander angeordnete endlos geschlossene Gurte 1 als Transportbänder 1 aufweist. Die Gurte 1 erstrecken sich im Wesentlichen in einer Längsrichtung X und sind in einer Querrichtung Y, senkrecht zur Längsrichtung X, zueinander beabstandet. Die Gurte 1 werden durch Antriebs- und Führungsmittel 41 in Form von Antriebs-, Führungs- und Stützrollen 41 angetrieben, geführt bzw. gestützt.

In der Höhe Z ist auf den Gurten 1 ein Transportkörper 42 in Form eines Werkstückträgers 42 z.B. zum Transport von Autokarosserien in der Fahrzeugfertigung angeordnet, der auch als Skid 42 bezeichnet werden kann. Der Skid 42 liegt mit den Unterseiten 43 seiner länglichen Träger wie z.B. seinen Kufen auf der Oberseite 28 der Gurte 1, d.h. der Gurtaußenseite 28, auf. Durch die Reibung zwischen Unterseiten 43 der Kufen und Oberseiten 28 der Gurte 1 kann der Skid 42 von den beiden Gurten 1 mitbewegt werden.

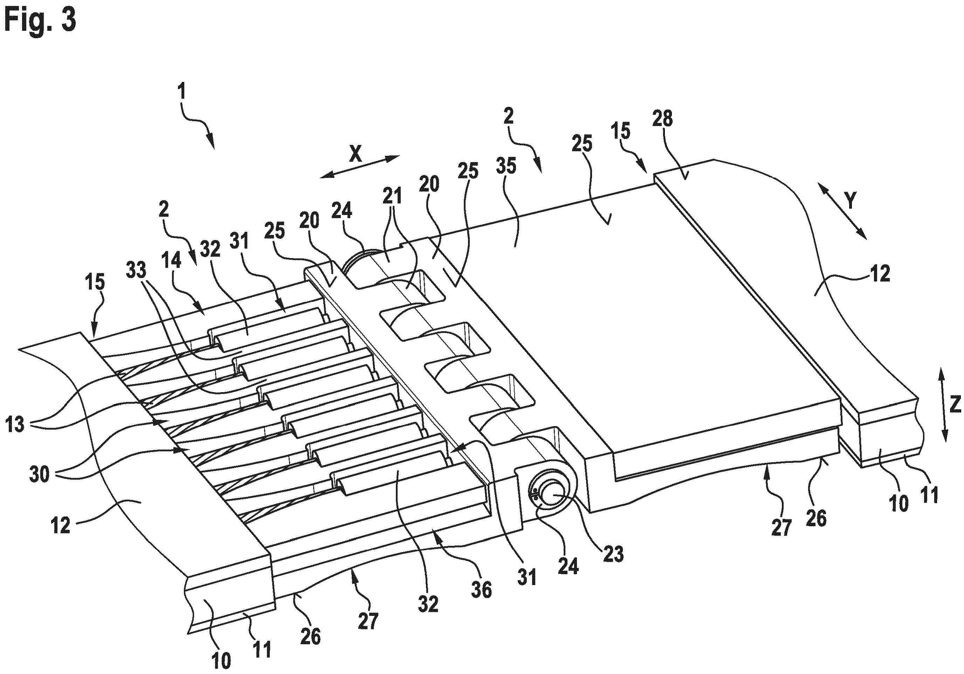

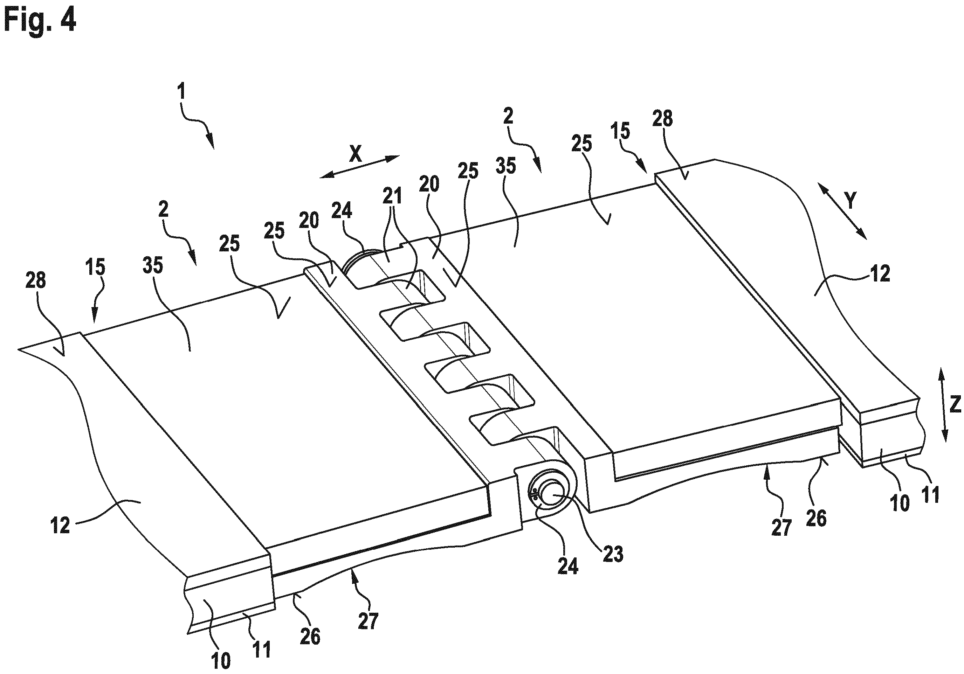

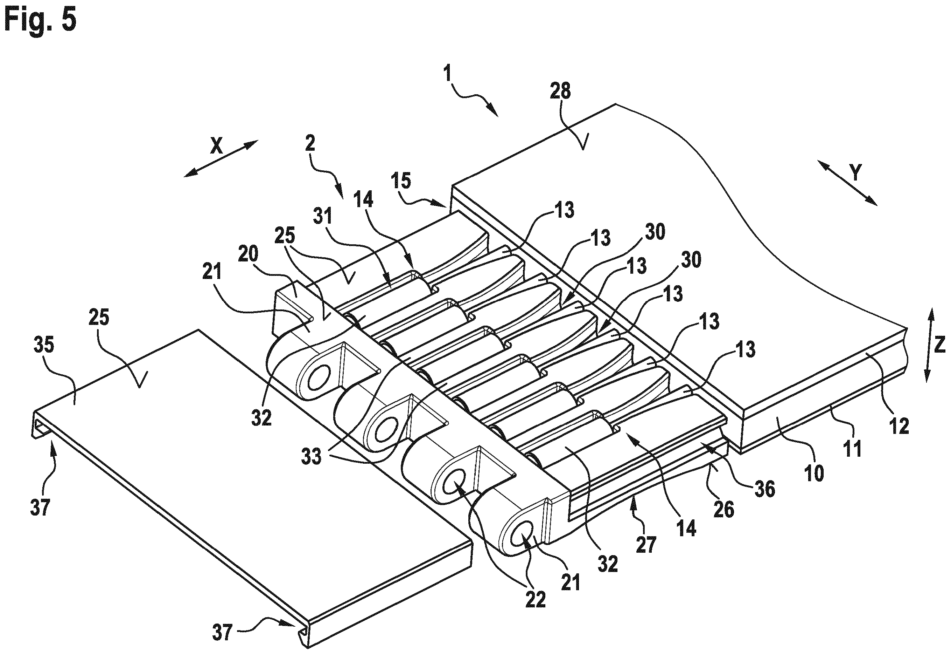

Die Fig. 3 zeigt eine perspektivische schematische Darstellung eines erfindungsgemäßen Gurtes 1 mit einem offenen und einem geschlossenen Verbindungselement 2. Die Fig. 4 zeigt die Darstellung der Fig. 3 mit zwei geschlossenen Verbindungselementen 2. Die Fig. 5 zeigt ein Ende 15 eines erfindungsgemäßen Gurtes 1 mit separater Abdeckung 35.

Das Verbindungselement 2 weist einen Grundkörper 20 auf, welcher aus einem harten oder härtbaren Stahl besteht. Der Grundkörper 20 weist an seiner einen Kante in Längsrichtung X mehrere zinnenartige Vorsprünge 21 auf, welche jeweils in Querrichtung Y verlaufende Querbohrungen 22 aufweisen.

Der Grundkörper 20 weist eine gurtäußere Seite 25 auf, welche grundsätzlich die Oberseite 25 des Grundkörpers 20 bildet. Da der Grundkörper 20 aus Metall, insbesondere aus Stahl, besteht, weist die Oberseite 25 des Grundkörpers 20 entsprechende metallische Reibeigenschaften auf.

Der Grundkörper 20 weist ferner eine gurtinnere Seite 26 auf, welche die Unterseite 26 des Grundkörpers 20 bildet. Die Unterseite 26 des Gurtkörpers 20 weist eine Einbuchtung 27 auf, welche halbkreisförmig ausgebildet ist und in ihrem Radius dem äußeren Radius z.B. einer Trommel entspricht, um die der Gurt 1 umlaufend kann.

Das Verbindungselement 2 weist ferner eine Mehrzahl von Klemmkörperaufnahmen 31 auf, welche als rechteckige Aussparungen innerhalb des Grundkörpers 20 ausgebildet sind. Die einzelnen Klemmkörperaufnahmen 31 sind durch mehrere in Längsrichtung X ausgebildete Stege 33 geteilt ist. Die Stege 33 können Kräfte in Längsrichtung X übertragen und hierdurch einem Verzug des Verbindungselements 2 aufgrund von Belastungen in Längsrichtung X entgegenwirken.

Die Klemmkörperaufnahmen 31 sind zur Oberseite 25 und zur Unterseite 26 hin offen ausgebildet. Von der Klemmkörperaufnahmen 31 erstrecken sich mehrere Festigkeitsträgerdurchführungen 30 in Längsrichtung X in entgegengesetzter Richtung zu den zinnenartigen Vorsprüngen 21 durch den Grundkörper 20 hindurch und sind zum Gurt 1 hin aufgeweitet ausgebildet. Die Festigkeitsträgerdurchführungen 30 sind in Form von Nuten 30 ausgeführt. Jede Klemmkörperaufnahme 31 weist eine Festigkeitsträgerdurchführung 30 auf.

In den Klemmkörperaufnahmen 31 ist jeweils ein entsprechend geformter Klemmkörper 32 angeordnet. Innerhalb jedes Klemmkörpers 32 ist ein Ende 14 eines Festigkeitsträgers 13 in Form eines Stahlseils 13 durch Verpressen geklemmt. Die Stahlseile 13 sind hierzu an ihren Enden 14 von dem Material eines elastomeren Grundkörpers 10 des Gurtes 1 freigelegt bzw. freigelassen. Der Gurt 1 weist einen elastomeren Grundkörper 10 auf, welcher seinerseits in der Höhe Z eine untere elastomere Deckschicht 11 und eine obere elastomere Deckschicht 12 aufweist. Die freigelegten Enden 14 der Stahlseile 13 mit dem Klemmkörper 32 sowie dem Verbindungselement 2 bilden gemeinsam das Gurtende 15. Die beiden Verbindungselemente 2 zweier Gurtenden 15 desselben Gurts 1 oder zweier Gurtsegmente 1 sind mittels eines Kopplungsstabs 23 durch ihre Querbohrungen 22 miteinander gelenksartig verbunden. Der Kupplungsstab 23 wird in dieser Position in Querrichtung Y beidseitig durch Kopplungsstabsicherungen 24 gesichert.

Erfindungsgemäß weist jedes Verbindungselement 2 eine Abdeckung 35 auf, welche den Bereich der Festigkeitsträgerdurchführungen 30 sowie Klemmkörperaufnahmen 31 zur Oberseite 25 des Grundkörpers 20 hin abdecken kann. Hierdurch weisen die Abdeckungen 35 jeweils an ihren einander in Querrichtung Y gegenüberliegenden Kanten Rasthaken 37 auf, welche in Längsrichtung X verlaufen und aufeinander zu nach innen gerichtet sind. Die Grundkörper 20 weisen an ihren in Querrichtung Y außenliegenden Kanten entsprechende Rastaufnahmen 36 auf, welche in Längsrichtung X verlaufen und nach außen in Querrichtung Y ausgebildet sind. Die Rastaufnahmen 36 der Grundkörper 20 stellen Nuten dar, in welche die Rasthaken 37 der Abdeckungen 35 als Vorsprünge eingreifen können. Die Abdeckungen 35 sind hierzu entsprechend elastisch ausgebildet, so dass sie entsprechend federnd aufgebogen werden können, um mit ihren Rasthaken 37 über die Kanten der Nuten 36 hinweg in diese eingreifen zu können. Die Rasthaken 37 können auf diese Weise auch wieder aus den Nuten 36 entfernt werden, um die Abdeckungen 35 abnehmen und die Festigkeitsträgerdurchführungen 30 und Klemmkörperaufnahmen 31 wieder freilegen und zugänglich machen zu können.

Erfindungsgemäß stellen die Abdeckungen 35 auf diese Weise den wesentlichen Teil der gurtäußeren Seite 25 des Grundkörpers 20 dar. Hierzu sind die Grundkörper 20 in der Höhe Z gegenüber der Oberseite der oberen elastomeren Deckschicht 12 soweit zurückversetzt ausgebildet, dass die Dicke der Abdeckungen 35 in der Höhe Z auf den Grundkörpern 20 aufsetzen und mit der Höhe Z der Oberseite der oberen elastomeren Deckschicht 12 abschließt, so dass an den Stellen der Verbindung gar kein bzw. ein möglichst geringer Höhenunterschied vorliegt. Die äußeren Oberflächen 25 der Abdeckungen 35 bilden somit die gurtäußeren Seiten der Grundkörper 20, auf denen der Skid 42 belagert und mitbewegt werden kann.

Erfindungsgemäß weisen die äußeren Oberflächen 25 der Abdeckungen 35 einen Reibwert auf, der möglichst gut dem Reibwert der Oberseite der oberen elastomeren Deckschicht 12 entspricht, wenigstens jedoch höher ist als der Reibwert der metallischen Grundkörper 20. Dies wird vorzugsweise durch das Material der Abdeckungen 35 wie z.B. Kunststoff erreicht. Dies kann alternativ oder zusätzlich durch die Beschaffenheit der Oberflächen 25 der Abdeckungen 35 wie z.B. Rillen oder dergleichen erreicht werden. Auf diese Weise kann nach außen gerichtet ein möglichst einheitliches Reibverhalten über die gesamte Länge des Gurtes 1 in Längsrichtung X erreicht werden. Insbesondere können unterschiedliche Reibpaarungen vermieden werden.

### Bezugszeichenliste

### (Teil der Beschreibung)

- X: Längsrichtung des Gurtes 1 bzw. Gurtsegments 1
- Y: Querrichtung bzw. Breite des Gurtes 1 bzw. Gurtsegments 1
- Z: Höhe bzw. Dicke des Gurtes 1 bzw. Gurtsegments 1

- 1: Gurt bzw. Gurtsegment, Transportband
- 10: elastomerer Grundkörper
- 11: untere elastomere Deckschicht
- 12: obere elastomere Deckschicht
- 13: Festigkeitsträger bzw. Stahlseile
- 14: Ende der Festigkeitsträger 13
- 15: Gurtende bzw. Gurtsegmentende

- 2: Verbindungselemente
- 20: Grundkörper
- 21: zinnenartige Vorsprünge
- 22: Querbohrungen der zinnenartigen Vorsprünge 21
- 23: Kopplungsstab
- 24: Kopplungsstabsicherung
- 25: gurtäußere Seite bzw. Oberseite des Grundkörpers 20 bzw. des Verbindungselements 2
- 26: gurtinnere Seite bzw. Unterseite des Grundkörpers 20 bzw. des Verbindungselements 2
- 27: Einbuchtung der Unterseite 26
- 28: Gurtaußenseite, Gurtoberseite

- 30: Festigkeitsträgerdurchführung des Grundkörpers 20, Nut
- 31: Klemmkörperaufnahme
- 32: Klemmkörper, Hülsen
- 33: Stege des Grundkörpers 20 in Längsrichtung X
- 35: Abdeckung
- 36: Rastaufnahme für Abdeckung 35
- 37: Rasthaken der Abdeckung 35

- 4: Transportsystem
- 40: Untergrund
- 41: Gurtantriebs- und -führungsmittel, Antriebs-, Führungs- und Stützrollen
- 42: Transportkörper, Werkstückträger, Karosserieträger, Skid (Ladegestell)
- 43: Unterseite des Skids 42 bzw. der Kufen des Skids 42

## Patentansprüche

1. Gurt (1) oder Gurtsegment (1), mit
einer Mehrzahl von in Längsrichtung (X) verlaufenden und parallel zueinander angeordneten Festigkeitsträgern (13), und
einem scharnierartigen Verbindungselement (2), welches ein Ende (15) des Gurtes (1) bzw. des Gurtsegments (1) bildet und zur Verbindung mit einem weiteren scharnierartigen Verbindungselement (2) des anderen Endes (15) des Gurts (1) bzw. mit einem Ende (15) eines weiteren Gurtsegments (1) ausgebildet ist,
wobei die Enden (14) der Festigkeitsträger (13) von dem scharnierartigen Verbindungselement (2) gehalten werden,
**dadurch gekennzeichnet, dass**
das scharnierartige Verbindungselement (2) an seiner gurtäußeren Seite (25) zumindest abschnittsweise einen vorbestimmten Reibwert aufweist,
wobei der Reibwert der gurtäußeren Seite (25) des scharnierartigen Verbindungselements (2) zumindest abschnittsweise dem Reibwert der Gurtaußenseite (28) entspricht.

2. Gurt (1) oder Gurtsegment (1) gemäß Anspruch 1,
wobei das scharnierartige Verbindungselement (2) eine Abdeckung (35) aufweist, welche zumindest abschnittsweise, vorzugsweise im Wesentlichen, vorzugsweise vollständig, die gurtäußere Seite (25) des scharnierartigen Verbindungselements (2) bildet und welche den vorbestimmten Reibwert aufweist.

3. Gurt (1) oder Gurtsegment (1) gemäß Anspruch 2,
wobei die Abdeckung (35) formschlüssig von dem scharnierartigen Verbindungselement (2) gehalten werden kann.

4. Gurt (1) oder Gurtsegment (1) gemäß Anspruch 3,
wobei die Abdeckung (35) Rasthaken (37) aufweist, die vorzugsweise das scharnierartige Verbindungselement (2) in Querrichtung (Y) umgreifen können.

5. Gurt (1) oder Gurtsegment (1) gemäß einem der vorherigen Ansprüche,
wobei die Enden (14) der Festigkeitsträger (13) mit wenigstens einem Klemmkörper (32) kraftschlüssig verbunden werden können,
wobei der Klemmkörper (32) von dem scharnierartigen Verbindungselement (2) wenigstens in Längsrichtung (X) formschlüssig gehalten werden kann.

6. Gurt (1) oder Gurtsegment (1) gemäß Anspruch 5,
wobei das scharnierartige Verbindungselement (2) wenigstens eine Klemmkörperaufnahme (31) aufweist, in der wenigstens ein mit einem Klemmkörper (32) versehenes Ende (14) eines Festigkeitsträgers (13) aufgenommen und wenigstens in Längsrichtung (X) formschlüssig gehalten werden kann.

7. Gurt (1) oder Gurtsegment (1) gemäß Anspruch 5 oder 6,
wobei das scharnierartige Verbindungselement (2) wenigstens zwei Klemmkörperaufnahmen (31) aufweist, in denen jeweils wenigstens ein mit einem Klemmkörper (32) versehenes Ende (14) eines Festigkeitsträgers (13) aufgenommen und wenigstens in Längsrichtung (X) formschlüssig gehalten werden kann,
wobei die beiden Klemmkörperaufnahmen (31) in Querrichtung (Y) durch einen in Längsrichtung (X) verlaufenden Steg (33) voneinander getrennt sind.

8. Gurt (1) oder Gurtsegment (1) gemäß einem der Ansprüche 6 oder 7,
wobei das scharnierartige Verbindungselement (2) wenigstens eine Festigkeitsträgerdurchführung (30) aufweist, durch die wenigstens ein Festigkeitsträger (13) in Längsrichtung (X) in eine Klemmkörperaufnahme (31) geführt werden kann.

9. Gurt (1) oder Gurtsegment (1) gemäß Anspruch 8,
wobei die Festigkeitsträgerdurchführung (30) als Bohrung (30) oder als Nut (30) durch das scharnierartige Verbindungselement (2) ausgebildet ist.

10. Gurt (1) oder Gurtsegment (1) gemäß einem der Ansprüche 6 bis 9,
wobei die Abdeckung (35) die Nut (30) und/oder die Klemmkörperaufnahme (31) senkrecht zur Längsrichtung (X) verschließen kann.

11. Gurt (1) oder Gurtsegment (1) gemäß einem der Ansprüche 8 bis 10,
wobei die Festigkeitsträgerdurchführung (30) in Längsrichtung (X) in entgegengesetzter Richtung zu den Enden (14) der Festigkeitsträger (13) aufgeweitet ausgebildet ist.

12. Gurt (1) oder Gurtsegment (1) gemäß einem der vorherigen Ansprüche,
wobei der Gurt (1) bzw. das Gurtsegment (1) einen elastomeren Grundkörper (10) aufweist, in dem die Festigkeitsträger (13) eingebettet sind,
wobei die Enden (14) der Festigkeitsträger (13) von dem Material des elastomeren Grundkörpers (10) freigelegt und/oder freigelassen sind.

13. Gurt (1) oder Gurtsegment (1) gemäß einem der vorherigen Ansprüche,
wobei das scharnierartige Verbindungselement (2) an seiner gurtinneren Seite (26) eine halbkreisförmige Einbuchtung (27) aufweist.

## Claims

1. Belt (1) or belt segment (1), having
a plurality of strength members (13) that run in the longitudinal direction (X) and are disposed so as to be mutually parallel, and
a hinge-type connecting element (2) which forms one end (15) of the belt (1), or belt segment (1), and is configured to be connected to a further hinge-type connecting element (2) of the other end (15) of the belt (1), or to one end (15) of a further belt segment (1), respectively,
wherein the ends (14) of the strength members (13) are held by the hinge-type connecting element (2),
**characterized in that**
the hinge-type connecting element (2) at least in portions on its outer belt side (25) has a predetermined coefficient of friction,
wherein the coefficient of friction of the outer belt side (25) of the hinge-type connecting element (2) at least in portions corresponds to the coefficient of friction of the belt outer side (28).

2. Belt (1) or belt segment (1) according to Claim 1,
wherein the hinge-type connecting element (2) has a cover (35) which at least in portions, preferably substantially, preferably completely, forms the outer belt side (25) of the hinge-type connecting element (2) and which has the predetermined coefficient of friction.

3. Belt (1) or belt segment (1) according to Claim 2,
wherein the cover (35) can be held in a form-fitting manner by the hinge-type connecting element (2).

4. Belt (1) or belt segment (1) according to Claim 3,
wherein the cover (35) has latching hooks (37) which can preferably encompass the hinge-type connecting element (2) in the transverse direction (Y).

5. Belt (1) or belt segment (1) according to one of the preceding claims,
wherein the ends (14) of the strength members (13) can be connected in a force-fitting manner to at least one clamping body (32),
wherein the clamping body (32) can be held in a form-fitting manner by the hinge-type connecting element (2) at least in the longitudinal direction (X).

6. Belt (1) or belt segment (1) according to Claim 5,
wherein the hinge-type connecting element (2) has at least one clamping body receptacle (31) in which at least one end (14), provided with a clamping body (32), of a strength member (13) can be received and held in a form-fitting manner at least in the longitudinal direction (X).

7. Belt (1) or belt segment (1) according to Claim 5 or 6,
wherein the hinge-type connecting element (2) has at least two clamping body receptacles (31) in which in each case at least one end (14), provided with a clamping body (32), of a strength member (13) can be received and held in a form-fitting manner at least in the longitudinal direction (X),
wherein the two clamping body receptacles (31) are separated from one another in the transverse direction (Y) by a web (33) extending in the longitudinal direction (X).

8. Belt (1) or belt segment (1) according to one of Claims 6 or 7,
wherein the hinge-type connecting element (2) has at least one strength member feedthrough (30) by way of which at least one strength member (13) can be routed in the longitudinal direction (X) into a clamping body receptacle (31).

9. Belt (1) or belt segment (1) according to Claim 8,
wherein the strength member feedthrough (30) is configured as a bore (30) or as a groove (30) through the hinge-type connecting element (2).

10. Belt (1) or belt segment (1) according to one of Claims 6 to 9,
wherein the cover (35) can close the groove (30) and/or the clamping body receptacle (31) perpendicularly to the longitudinal direction (X).

11. Belt (1) or belt segment (1) according to one of Claims 8 to 10,
wherein the strength member feedthrough (30) is configured so as to widen in the longitudinal direction (X) in the direction away from the ends (14) of the strength members (13).

12. Belt (1) or belt segment (1) according to one of the preceding claims,
wherein the belt (1) or the belt segment (1), respectively, has an elastomer main body (10) in which the strength members (13) are embedded,
wherein the ends (14) of the strength members (13) are exposed and/or omitted by the material of the elastomer main body (10).

13. Belt (1) or belt segment (1) according to one of the preceding claims,
wherein the hinge-type connecting element (2) has a semicircular concavity (27) on its inner belt side (26).

## Revendications

1. Courroie (1) ou segment de courroie (1), avec
une pluralité de supports de résistance (13) s'étendant dans la direction longitudinale (X) et agencés parallèlement les uns aux autres, et
un élément de liaison de type charnière (2), qui forme une extrémité (15) de la courroie (1) ou du segment de courroie (1) et qui est réalisé pour être relié à un autre élément de liaison de type charnière (2) de l'autre extrémité (15) de la courroie (1) ou à une extrémité (15) d'un autre segment de courroie (1),
les extrémités (14) des supports de résistance (13) étant maintenues par l'élément de liaison de type charnière (2),
**caractérisée en ce que**
l'élément de liaison de type charnière (2) présente, au moins par sections, un coefficient de frottement prédéterminé sur son côté extérieur à la courroie (25),
le coefficient de frottement du côté extérieur à la courroie (25) de l'élément de liaison de type charnière (2) correspondant au moins par sections au coefficient de frottement du côté extérieur de la courroie (28).

2. Courroie (1) ou segment de courroie (1) selon la revendication 1,
l'élément de liaison de type charnière (2) présentant un couvercle (35) qui forme au moins par sections, de préférence essentiellement, de préférence complètement, le côté extérieur à la courroie (25) de l'élément de liaison de type charnière (2) et qui présente le coefficient de frottement prédéterminé.

3. Courroie (1) ou segment de courroie (1) selon la revendication 2,
le couvercle (35) pouvant être maintenu par complémentarité de forme par l'élément de liaison de type charnière (2).

4. Courroie (1) ou segment de courroie (1) selon la revendication 3,
le couvercle (35) présentant des crochets d'encliquetage (37) qui peuvent de préférence entourer l'élément de liaison de type charnière (2) dans la direction transversale (Y).

5. Courroie (1) ou segment de courroie (1) selon l'une quelconque des revendications précédentes,
les extrémités (14) des supports de résistance (13) pouvant être reliées par adhérence à au moins un corps de serrage (32),
le corps de serrage (32) pouvant être maintenu par l'élément de liaison de type charnière (2), au moins dans la direction longitudinale (X), par complémentarité de forme.

6. Courroie (1) ou segment de courroie (1) selon la revendication 5,
l'élément de liaison de type charnière (2) présentant au moins un logement de corps de serrage (31) dans lequel au moins une extrémité (14) d'un support de résistance (13) pourvue d'un corps de serrage (32) peut être reçue et maintenue par complémentarité de forme au moins dans la direction longitudinale (X).

7. Courroie (1) ou segment de courroie (1) selon la revendication 5 ou 6, l'élément de liaison de type charnière (2) présentant au moins deux logements de corps de serrage (31) dans chacun desquels au moins une extrémité (14), pourvue d'un corps de serrage (32), d'un support de résistance (13) peut être reçue et maintenue par complémentarité de forme au moins dans la direction longitudinale (X),
les deux logements de corps de serrage (31) étant séparés l'un de l'autre dans la direction transversale (Y) par une nervure (33) s'étendant dans la direction longitudinale (X).

8. Courroie (1) ou segment de courroie (1) selon l'une quelconque des revendications 6 ou 7,
l'élément de liaison de type charnière (2) présentant au moins un passage de support de résistance (30) à travers lequel au moins un support de résistance (13) peut être guidé dans la direction longitudinale (X) dans un logement de corps de serrage (31).

9. Courroie (1) ou segment de courroie (1) selon la revendication 8,
le passage de support de résistance (30) étant réalisé sous forme d'alésage (30) ou sous forme de rainure (30) à travers l'élément de liaison de type charnière (2).

10. Courroie (1) ou segment de courroie (1) selon l'une quelconque des revendications 6 à 9,
le couvercle (35) pouvant fermer la rainure (30) et/ou le logement de corps de serrage (31) perpendiculairement à la direction longitudinale (X).

11. Courroie (1) ou segment de courroie (1) selon l'une quelconque des revendications 8 à 10,
le passage de support de résistance (30) étant réalisé sous forme élargie dans la direction longitudinale (X) dans la direction opposée aux extrémités (14) des supports de résistance (13).

12. Courroie (1) ou segment de courroie (1) selon l'une quelconque des revendications précédentes,
la courroie (1) ou le segment de courroie (1) présentant un corps de base élastomère (10) dans lequel sont noyés les supports de résistance (13),
les extrémités (14) des supports de résistance (13) étant exposées et/ou laissées libres par le matériau du corps de base élastomère (10).

13. Courroie (1) ou segment de courroie (1) selon l'une quelconque des revendications précédentes,
l'élément de liaison de type charnière (2) présentant un renfoncement semi-circulaire (27) sur son côté intérieur à la courroie (26).
